# EUROPÄISCHE PATENTSCHRIFT

(11) **EP 1 744 939 B1**
(45) Veröffentlichungstag und Bekanntmachung des Hinweises auf die Patenterteilung: **04.11.2009**
(21) Anmeldenummer: 05732334.7
(22) Anmeldetag: 22.04.2005
(51) Int. Cl.: B60R 22/36, B60R 22/46

(54) **LEISTUNGSSTRAFFER MIT HEBELGESTEUERTER WELLENVERRIEGELUNG**
POWERED TENSIONER WITH A LEVER-CONTROLLED SHAFT LOCK
PRETENSIONNEUR ELECTRIQUE COMPRENANT UN DISPOSITIF D'ARRET D'ESSIEU COMMANDE PAR UN LEVIER

(30) Priorität: 14.05.2004 DE 102004024008
(43) Veröffentlichungstag der Anmeldung: 24.01.2007
(73) Patentinhaber: AUTOLIV DEVELOPMENT AB, 447 83 Vargarda (SE)
(72) Erfinder: SCHMIDT, Martin, 25337 Elmshorn (DE); SUHR, Stefan, 25337 Elmshorn (DE); SCHNEIDER, Thomas, 25813 Simonsberg Ot Finkhaushallig (DE)
(74) Vertreter: Müller, Karl-Ernst
(86) Internationale Anmeldenummer: PCT/EP2005/004363
(87) Internationale Veröffentlichungsnummer: WO 2005/110823

(56) Entgegenhaltungen:
- WO-A-03/082640
- US-A- 4 455 000

## Beschreibung

Die Erfindung betrifft eine Gurtaufroller-Gurtstraffer-Kombination mit einem Gehäuse, mit einer wenigstens ein fahrzeugsensitiv und/oder gurtbandsensitiv in eine gehäuseseitige Blockierverzahnung einsteuerbares Blockiermittel aufweisenden Blockiereinrichtung für die Gurtwelle und mit einer auf die Gurtwelle einwirkenden und ein über die Blockiereinrichtung kraftübertragend mit der Gurtwelle verbindbares Antriebsrad aufweisenden Straffvorrichtung, wobei das Antriebsrad auf eine Steuerscheibe als Bestandteil des fahrzeugsensitiven und/oder gurtbandsensitiven Steuersystems für das Blockiermittel einwirkt und durch die über das Antriebsrad eingeleitete Relativdrehung der Steuerscheibe gegenüber der Gurtwelle das Blockiermittel in den kraftübertragenden Eingriff mit dem Antriebsrad ausgesteuert wird.

Eine Gurtaufroller-Gurtstraffer-Kombination mit den vorgenannten Merkmalen ist als sogenannter Leistungsstraffer in der WO03/082640 A1 beschrieben. Ein besonderes Merkmal dieser bekannten Gurtaufroller-Gurtstraffer-Kombination besteht darin, daß auf eine gesonderte Kupplung zur Ankopplung des Antriebsrades an die Gurtwelle verzichtet und statt dessen die ohnehin für die selbstsperrende Gurtaufroller-Funktion erforderliche Blockiereinrichtung bzw. das entsprechend angeordnete Blockiermittel in Form einer radial auslenkbaren Blockierklinke zur kraftübertragenden Verbindung des Antriebsrades mit der Gurtwelle während des Straffvorganges herangezogen ist. Gleichzeitig ist das Antriebsrad außerhalb seiner Drehung nach Auslösung der Straffvorrichtung an dem Gehäuse der Gurtaufroller-Gurtstraffer-Kombination mittels einer lösbaren Sperrklinke festgelegt und bildet somit für die Gurtaufroller-Funktion einen Teil des Gehäuses zur Aufnahme bzw. Ableitung der von der Gurtwelle ausgehenden Blockierkräfte.

Da die Bewegung der Blockierklinke im Rahmen der selbstsperrenden Gurtaufroller-Funktion von einer zugeordneten Steuerscheibe und deren fahrzeugsensitiv bzw. gurtbandsensitiv ausgelöster Relativdrehung zur Gurtwelle herbeigeführt wird, ist bei der bekannten Gurtaufroller-Gurtstraffer-Kombination ein gesondertes Ansteuerelement vorgesehen, welches einerseits formschlüssig mit dem Antriebsrad verbunden und welches andererseits über trägheitsgesteuerte Kupplungsglieder mit der Steuerscheibe kuppelbar ist. Beginnt sich nach Auslösung der Straffvorrichtung das Antriebsrad in Aufwickeldrehrichtung zu drehen, so wird das sich mitdrehende Ansteuerelement aufgrund der Masseträgheit seiner zugeordneten Kupplungsglieder mit der Steuerscheibe gekuppelt und nimmt diese bei seiner Drehbewegung mit. Die dadurch herbeigeführte Relativdrehung der Steuerscheibe zur Gurtwelle führt zu einer Auslenkung der Blockierklinke in den kraftübertragenden Eingriff mit einer an dem Antriebsrad ausgebildeten Innenverzahnung. Hierdurch ist die Gurtwelle kraftübertragend an das sich drehende Antriebsrad gekoppelt.

Mit der bekannten Gurtaufroller-Gurtstraffer-Kombination ist der Nachteil verbunden, daß die Anordnung des zusätzlichen Ansteuerelements mit dessen zugeordneten trägheitsgesteuerten Kupplungsgliedern einen zusätzlichen Aufwand in Herstellung und Montage dieser zusätzlichen Bauteile darstellt, wobei eine derartige zusätzliche Kupplung den Ansprechweg der Straffvorrichtung für die Gurtwelle verlängert und auch eine funktionsbedingte Schwachstelle darstellen kann. Der Erfindung liegt daher die Aufgabe zugrunde, bei einer Gurtaufroller-Gurtstraffer-Kombination mit den gattungsgemäßen Merkmalen die Ansteuerung der Ankupplung des Antriebsrades an die Gurtwelle bei Beginn der Drehung des Antriebsrades zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß an dem Gehäuse ein von dem Antriebsrad bei dessen Drehung in Straffrichtung mitgenommener Hebel schwenkbar gelagert ist, dessen freies Ende bei seiner durch die Rotation des Antriebsrades bewirkten Schwenkbewegung in Eingriff mit der Steuerscheibe kommt und dabei über einen Teil seines Schwenkweges die Steuerscheibe zu deren Relativdrehung gegenüber der Gurtwelle antreibt und der Hebel nach Durchschreiten eines dem Antrieb der Steuerscheibe dienenden Schwenkweges von der Steuerscheibe und dem Antriebsrad freikommt. Mit der Erfindung ist der Vorteil verbunden, daß mit dem Schwenkhebel nur ein zusätzliches Bauteil vorgesehen werden muß, der zudem von dem Antriebsrad mit einer Zwangssteuerung beaufschlagt wird und dadurch die erforderliche Drehbewegung der Steuerscheibe einleitet. Damit ist eine erhebliche Vereinfachung des Aufbaus der Gurtaufroller-Gurtstraffer-Kombination verbunden, ebenso eine Verbesserung der Funktionssicherheit. Da der Hebel am Ende seiner Funktion außer Eingriff mit der Steuerscheibe und dem Antriebsrad gebracht ist und in dieser Stellung verbleibt, kann die weitere Funktion der Gurtaufroller-Gurtstraffer-Kombination durch den Hebel nicht mehr gestört werden.

Nach einem Ausführungsbeispiel der Erfindung ist vorgesehen, daß das Schwenklager des Hebels außerhalb des Antriebsrades an dem Gehäuse angeordnet ist und der Hebel das Antriebsrad in einer auf dessen Umfang ausgebildeten Lücke durchgreift und während des dem Antrieb der Steuerscheibe dienenden Schwenkweges mit seinem freien Ende mit einer an der Steuerscheibe ausgebildeten Außenverzahnung in Eingriff steht. Es kann weiter vorgesehen sein, daß das Schwenklager des Hebels derart angeordnet ist, daß der Hebel nach Abschluß seiner Eingriffsbewegung mit der Steuerscheibe durch die Weiterdrehung des Antriebsrades aus der Lücke des Antriebsrades herausgedrängt ist.

In der Zeichnung ist ein Ausführungsbeispiel der Erfindung wiedergegeben, welches nachstehend beschrieben ist. Es zeigen:
- Fig. 1: eine isolierte Darstellung des Antriebsrades mit dahinterliegender Steuerscheibe und Hebel einer gattungsgemäßen Gurtaufroller-Gurtstraffer-Kombination in einer schematischen Seitenansicht vor Auslösung der Straffvorrichtung,
- Fig. 2: den Gegenstand der Figur 1 bei beginnender Drehung des Antriebsrades und dadurch bedingtem ersten Kontakt des Hebels mit dem Steuerrad,
- Fig. 3: den Gegenstand der Figur 1 bzw. Figur 2 während der Mitnahme der Steuerscheibe aufgrund der Schwenkbewegung des Hebels,
- Fig. 4: den Gegenstand der Figuren 1 bis 3 im Anschluß an die funktionsbedingte Bewegung des Hebels.

Die Gurtaufroller-Gurtstraffer-Kombination mit den gattungsgemäßen Merkmalen ist in ihrem vollständigen Aufbau und Funktion in der WO03/082640 A1 beschrieben, so daß auf die Offenbarung der vorgenannten Schrift Bezug genommen und diese Offenbarung auch zum Gegenstand der vorliegenden Anmeldung gemacht wird. Anstelle des an dem Antriebsrad über zugehörige Formschlußgestaltungen festgelegten Mitnehmerteils, welches über die masseträgen Kupplungsklinken und deren Eingriff in die an einer funktionell einer Steuerscheibe entsprechenden Trägheitsmasse ausgebildete Innenverzahnung die Relativbewegung der Trägheitsmasse als Steuerscheibe gegenüber der Gurtwelle auslöst und bewirkt, ist bei der vorliegenden Erfindung in einer vereinfachten Konstruktion ein nachfolgend beschriebener Hebel vorgesehen.

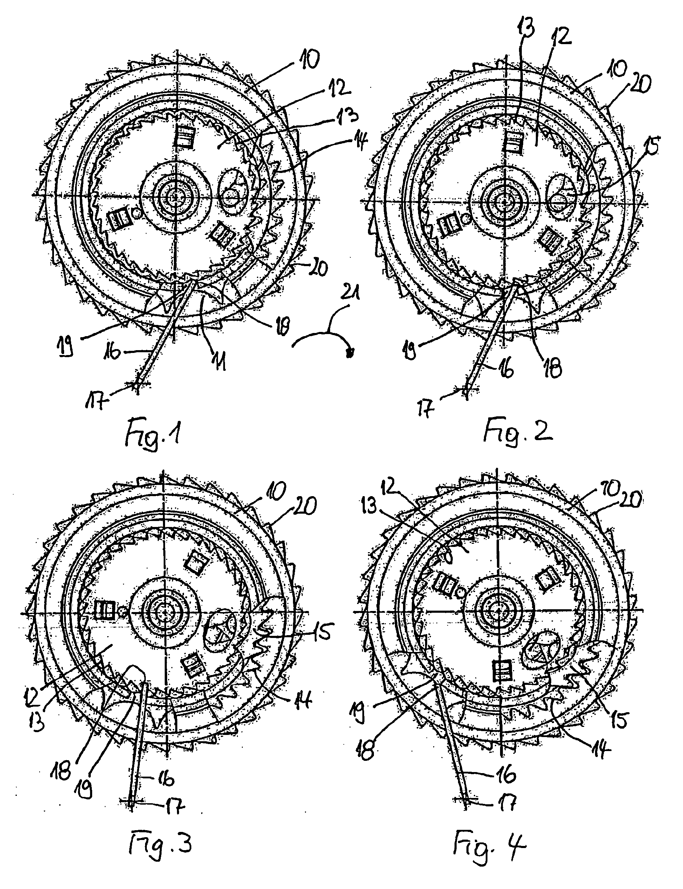

In einer vereinfachten Darstellung ist in den Figuren 1 bis 4 ein Antriebsrad 10 erkennbar, welches auf seinem äußeren Umfang mit Kalotten 11 zur Aufnahme von als Antrieb dienenden, von einer pyrotechnischen Treibladung beschleunigten Massekugeln versehen ist. In einer anderen Ebene weist das Antriebsrad 10 zusätzliche eine Außenverzahnung 20 zu seiner Festlegung an dem nicht weiter dargestellten Gehäuse der Gurtaufroller-Gurtstraffer-Kombination sowie eine Innenverzahnung 14 für den Eingriff wenigstens einer an der Gurtwelle der Gurtaufroller-Gurtstraffer-Kombination ausschwenkbar gelagerten Blockierklinke 15 auf. Die Blockierklinke 15 wird durch eine Relativdrehung einer mit einer Außenverzahnung 13 versehenen Steuerscheibe 12 gegenüber der Gurtwelle in seine aus den Figuren 3 und 4 erkennbare Eingriffsstellung mit der Innenverzahnung 14 des Antriebsrades 10 ausgelenkt. Dieser konstruktive Aufbau einschließlich der entsprechenden Funktion der angesprochenen Bauteile ist in der WO03/082640 A1 eingehend beschrieben.

An dem nicht weiter dargestellten Gehäuse ist ein Hebel 16 um einen an seinem einen Ende gehäusefest ausgebildetes Schwenklager 17 schwenkbar gelagert, der das Antriebsrad 10 in einer auf dessen äußeren Umfang ausgebildeten Lücke 19 durchgreift und in der in Figur 1 dargestellten Ruhelage mit seinem freien Ende 18 tangential zum Außenumfang der Steuerscheibe 12 liegt, ohne allerdings in der in Figur 1 dargestellten Ruhelage vor Auslösung der Straffvorrichtung die Drehbewegung der Steuerscheibe 12 während der normalen Gurtaufroller-Funktion zu behindern.

Wird nun nach Auslösung der Straffvorrichtung das Antriebsrad 10 in seine Drehrichtung im Uhrzeigersinn entsprechend Pfeil 21 beschleunigt, so nimmt das Antriebsrad 10 den in seiner Lücke 19 liegenden Hebel 16 zwangsgeführt mit und versetzt diesen in eine Schwenkbewegung um das Schwenklager 17. Dabei kommt der Hebel 16 mit seinem freien Ende 18 in Kontakt mit der Außenverzahnung 13 der Steuerscheibe 12 (Figur 2) und nimmt bei seiner durch die Weiterdrehung des Antriebsrades 10 herbeigeführten weiteren Schwenkbewegung die Steuerscheibe 12 mit und versetzt diese in Drehung (Figur 3), so dass dadurch die zur Aussteuerung der Blockierklinke 15 in die Innenverzahnung 14 des Antriebsrades 10 erforderliche Relativdrehung der Steuerscheibe 12 gegenüber der Gurtwelle herbeigeführt wird. Bei der weiteren Drehung des Antriebsrades 10 wird der Hebel 16 mit seinem freien Ende 18 aus der Lücke 19 ausgestoßen und kommt somit von dem Antriebsrad 10 wie auch von der Steuerscheibe 12 frei; da der Hebel 16 in dieser Stellung verbleibt, kann der Hebel 16 die weitere Funktion der Gurtaufroller-Gurtstraffer-Kombination unabhängig von der weiteren Drehrichtung von Antriebsrad und Steuerscheibe nicht mehr beeinträchtigen.

Der bei dieser Lösung verwirklichte relativ kurze Schwenkweg des Hebels 16 als Antriebsweg für die Steuerscheibe 12 reicht aus, weil eine relativ geringe Relativdrehung der Steuerscheibe 12 gegenüber der Gurtwelle ausreichend ist, um die Blockierklinke 15 in deren Eingriffslage mit der Innenverzahnung 14 des Antriebsrades 10 auszulenken.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Gurtaufroller-Gurtstraffer-Kombination mit einem Gehäuse, mit einer wenigstens ein fahrzeugsensitiv und/oder gurtbandsensitiv in eine gehäuseseitige Blockierverzahnung einsteuerbares Blockiermittel aufweisenden Blockiereinrichtung für die Gurtwelle und mit einer auf die Gurtwelle einwirkenden und ein über die Blockiereinrichtung kraftübertragend mit der Gurtwelle verbindbares Antriebsrad aufweisenden Straffvorrichtung, wobei das Antriebsrad auf eine Steuerscheibe als Bestandteil des fahrzeugsensitiven und/oder gurtbandsensitiven Steuersystems für das Blockiermittel einwirkt und durch die über das Antriebsrad eingeleitete Relativdrehung der Steuerscheibe gegenüber der Gurtwelle das Blockiermittel in den kraftübertragenden Eingriff mit dem Antriebsrad ausgesteuert wird, **dadurch gekennzeichnet, daß** an dem Gehäuse ein von dem Antriebsrad (10) bei dessen Drehung in Straffrichtung mitgenommener Hebel (16) schwenkbar gelagert ist, dessen freies Ende (18) bei seiner durch die Rotation des Antriebsrades (10) bewirkten Schwenkbewegung in Eingriff mit der Steuerscheibe (12) kommt und dabei über einen Teil seines Schwenkweges die Steuerscheibe (12) zu deren Relativdrehung gegenüber der Gurtwelle antreibt und der Hebel (16) nach Durchschreiten seines dem Antrieb der Steuerscheibe (12) dienenden Schwenkweges von der Steuerscheibe (12) und dem Antriebsrad (10) freikommt.

2. Gurtaufroller-Gurtstraffer-Kombination nach Anspruch 1, **dadurch gekennzeichnet, daß** das Schwenklager (17) des Hebels (16) außerhalb des Antriebsrades (10) an dem Gehäuse angeordnet ist und der Hebel (16) das Antriebsrad (10) in einer auf dessen Umfang ausgebildeten Lücke (19) durchgreift und während des dem Antrieb der Steuerscheibe (12) dienenden Schwenkweges mit seinem freien Ende (18) mit einer an der Steuerscheibe (12) ausgebildeten Außenverzahnung (13) in Eingriff steht.

3. Gurtaufroller-Gurtstraffer-Kombination nach Anspruch 1, **dadurch gekennzeichnet, daß** das Schwenklager (17) des Hebels (16) derart angeordnet ist, daß der Hebel (16) nach Abschluß seiner Eingriffsbewegung mit der Steuerscheibe (12) durch die Weiterdrehung des Antriebsrades (10) aus der Lücke (19) des Antriebsrades (10) herausgedrängt ist.

## Claims

1. A combination of belt retractor and belt tensioner with a housing, with a belt shaft locking device comprising at least one locking means which can be actuated, with vehicle sensitivity and/or belt strap sensitivity, into a set of locking teeth on the housing side, and with a tensioning device which acts on the belt shaft and comprises a drive wheel which can be connected to the belt shaft via the locking device in power-transmitting relationship, wherein the drive wheel acts on a control disc as part of the vehicle sensitive and/or belt strap sensitive control system for the looking means and, as a result of the relative rotation of the control disc relatively to the belt shaft as introduced by way of the drive wheel the locking means is actuated into the power-transmitting engagement with the drive wheel, **characterised in that** a lever (16) entrained by the drive wheel (10) on its rotation in the tensioning direction is mounted pivotally on the housing and on its pivoting movement effected by the rotation of the drive wheel (10) its free end (18) comes into engagement with the control disc (12) and in so doing, over part of its pivoting movement, drives the control disc (12) for its relative rotation relatively to the belt shaft and after the lever (16) has passed through its pivoting path serving to drive the control disc (12) it is released from the control disc (12) and the drive wheel (10).

2. A combination of belt retractor and belt tensioner according to claim 1, **characterised in that** the pivot bearing (17) for the lever (16) is disposed outside the drive wheel (10) on the housing and the lever (16) extends through the drive wheel (10) in a gap (19) formed on its periphery and during the pivoting movement serving to drive the control disc (12) its free end (18) engages an outer set of teeth (13) formed on the control disc (12).

3. A combination of belt retractor and belt tensioner according to claim 1, **characterised in that** the pivot bearing (17) of the lever (16) is so disposed that on completion of its engagement movement with the control disc (12) the lever (16) is displaced from the gap (19) of the drive wheel (10) by the further rotation of the drive wheel (10).

## Revendications

1. Combinaison formée par un enrouleur de ceinture et un prétensionneur de ceinture, comportant un boîtier, un dispositif de blocage de l'arbre d'enroulement muni d'au moins un moyen de blocage sensible au véhicule et/ou sensible à la sangle, pouvant être amené en prise dans une denture de blocage du côté boîtier, et un prétensionneur agissant sur l'arbre d'enroulement et muni d'une roue d'entraînement apte à être reliée, via le dispositif de blocage, à l'arbre d'enroulement en vue de la transmission d'une force, ladite roue d'entraînement agissant sur un disque de commande faisant partie intégrante du système de commande, sensible au véhicule et/ou sensible à la sangle, pour le moyen de blocage, tandis que sous l'effet de la rotation relative du disque de commande par rapport à l'arbre d'enroulement, induite par la roue d'entraînement, le moyen de blocage est désolidarisé de son engrènement de transmission de force avec la roue d'entraînement, **caractérisée en ce que** sur le boîtier est monté pivotant un levier (16) qui, sous l'effet de la rotation de la roue d'entraînement (10), est entraîné par celle-ci dans la direction de prétensionnement, et dont l'extrémité libre (18), lors de son mouvement de pivotement induit par la rotation de la roue d'entraînement (10), entre en prise avec le disque de commande (12) et, sur une partie de sa trajectoire de pivotement, actionne le disque de commande (12) en vue de la rotation relative de celui-ci par rapport à l'arbre d'enroulement, et le levier (16), après avoir parcouru sa trajectoire de pivotement destinée à l'actionnement du disque de commande (12), est désolidarisé du disque de commande (12) et de la roue d'entraînement (10).

2. Combinaison formée par un enrouleur de ceinture et un prétensionneur de ceinture selon la revendication 1, **caractérisée en ce que** le palier de pivotement (17) du levier (16) est disposé sur le boîtier en dehors de la roue d'entraînement (10), et le levier (16) passe à travers la roue d'entraînement (10) dans un interstice (19) réalisé sur le pourtour de celle-ci, et pendant la trajectoire de pivotement, destinée à l'actionnement du disque de commande (12), entre en prise par son extrémité libre (18) avec une denture extérieure (13) réalisée sur le disque de commande (12).

3. Combinaison formée par un enrouleur de ceinture et un prétensionneur de ceinture selon la revendication 1, **caractérisée en ce que** le palier de pivotement (17) du levier (16) est agencé de telle sorte que le levier (16), à la fin de son mouvement d'engrènement avec le disque de commande (12), est poussé hors de l'interstice (19) de la roue d'entraînement (10) sous l'effet de la poursuite de la rotation de la roue d'entraînement (10).
